(19) **Europäisches Patentamt**
**European Patent Office**
**Office européen des brevets**

(11) **EP 1 441 431 B1**

(12) **EUROPÄISCHE PATENTSCHRIFT**

(45) Veröffentlichungstag und Bekanntmachung des Hinweises auf die Patenterteilung:
**19.09.2007 Patentblatt 2007/38**

(51) Int Cl.:
*H02K 5/10* *(2006.01)*

(21) Anmeldenummer: **03029346.8**

(22) Anmeldetag: **18.12.2003**

(54) **Motorgehäuse für einen Elektromotor**

Housing for an electric motor

Boîtier pour un moteur électrique

(84) Benannte Vertragsstaaten:
**DE FR IT**

(30) Priorität: **21.01.2003 DE 10302130**

(43) Veröffentlichungstag der Anmeldung:
**28.07.2004 Patentblatt 2004/31**

(73) Patentinhaber: **MINEBEA Co., Ltd.**
**Kitasaku-gun, Nagano-ken (JP)**

(72) Erfinder:
• **Wysk, Hans-Joachim**
**78048 Villingen-Schwenningen (DE)**

• **Ganter, Helmut**
**78073 Bad Dürrheim (DE)**

(74) Vertreter: **Liesegang, Eva et al**
**Forrester & Boehmert,**
**Pettenkoferstrasse 20-22**
**80336 München (DE)**

(56) Entgegenhaltungen:
**US-A- 3 777 194       US-A- 5 215 312**
**US-A- 5 796 197**

**Beschreibung**

Die Erfindung betrifft ein Motorgehäuse für einen Elektromotor gemäß dem Oberbegriff von Patentanspruch 1 (US-A-3,777,194) sowie einen Elektromotor, der in einem solchen Motorgehäuse eingeschlossen ist.

Die Erfindung betrifft allgemein das Gebiet der Elektromotoren und insbesondere Gleichstrommotoren, die als Innenläufermotor oder Außenläufermotor konfiguriert sein können. Noch spezieller kann es sich bei dem Motor um einen elektronisch kommutierten, bürstenlosen Gleichstrommotor oder einen anderen Permanentmagnet-Motor handeln. Solche Motoren umfassen eine Rotorbaugruppe, die mit einer Welle verbunden ist und einen oder mehreren Permanentmagneten aufweist, sowie eine Statorbaugruppe, die einen z.B. aus Blechen aufgebauten Statorkörper und Phasenwicklungen umfaßt. Zwei Lager sind mit axialem Abstand an der Welle angeordnet, um die Rotorbaugruppe relativ zu der Statorbaugruppe zu lagern. Solche Motoren weisen in der Regel ferner eine Sensorvorrichtung zur Erfassung der Drehlage, Drehzahl und/oder des Drehmoments der Rotorbaugruppe relativ zur Statorbaugrupe auf. Die Sensorvorrichtung kann z.B. einen Positionssensor umfassen.

Der erfindungsgemäße Elektromotor ist insbesondere für Anwendungen im Automobilbereich bestimmt, beispielsweise zur Unterstützung der Lenkung, zum Antreiben einer separat vom KFZ-Motor angeordneten Kühlwasserpumpe eines Kraftfahrzeuges oder als Getriebeschaltmotor. Solche Motoren kommen häufig im Verbrennungsmotorraum eines Kraftfahrzeugs zum Einsatz, wo sie hohen Umgebungstemperaturen und starken Temperaturschwankungen ausgesetzt sind. Insbesondere in Geländefahrzeugen, die besondere Anforderungen an den Motor, wie Watfähigkeit (Tauchfähigkeit im Wasser) stellen, können die Temperaturschwankungen, welchen der Elektromotor ausgesetzt ist, besonders groß sein. Gleichzeitig muß bei solchen Motoren sichergestellt werden, daß kein Wasser und keine anderen Verschmutzungen in den Motor eindringen können. Die Motoren müssen daher gegen diese äußeren Einflüsse geschützt und robust aufgebaut sein und gleichzeitig großen Temperaturschwankungen standhalten können.

Aus der DE 36 35 297 ist ein Elektromotor in vollkommen geschlossener Bauweise bekannt, der durch eine in dem geschlossenen Gehäuse zirkulierende Flüssigkeit gekühlt wird, wobei Druckausgleichvorrichtungen zum Volumen- bzw. Druckausgleich des Kühlmittels in dem Motor vorgesehen sind.

Aus der DE 44 44 643 ist ein Elektromotor bekannt, in dem eine Druckausgleichseinrichtung durch eine BTFE-Membran realisiert ist, die in einem Verbindungskanal zwischen dem Inneren des Elektromotors und der Außenluft angeordnet ist. Der Druckausgleich wird durch einen Luftaustausch bewirkt, wobei die Membran verhindert, daß Feuchtigkeit in das Innere des Motorgehäuses gelangt.

US 5,796,197 beschreibt einen Elektromotor, der vollständig mit einer dielektrischen Flüssigkeit gefüllt ist. Der Motor ist in einem Gehäuse aufgenommen, das in mehrere Abschnitte aufgeteilt ist. In Richtung der Längserstreckung des Motors sind eine Belüftungskammer, ein Motorraum, ein Raum zum Aufnehmen eines Drucklagers, ein Druckausgleichsraum und eine Druckausgleichskammer angeordnet. Die Druckausgleichskammer am unteren Ende des Motors ist über ein Belüftungsrohr mit der Belüftungskammer verbunden.

Die US 5,218,312 beschreibt ein Druckausgleichselement, das in eine Wand eines Getriebegehäuses eingesetzt ist.

Es ist eine Aufgabe der Erfindung, ein Motorgehäuse für einen Elektromotor anzugeben, das mit geringem Aufwand hergestellt werden kann.

Diese Aufgabe wird durch ein Motorgehäuse mit den Merkmalen von Anspruch 1 gelöst.

Die Erfindung schafft somit ein Motorgehäuse, das durch die flexible Trennwand nach außen hin weitgehend hermetisch abgedichtet ist. Die flexible Trennwand ist zwischen Gehäusekörper und Gehäusedeckel eingeklemmt und bildet eine Dichtung zwischen diesen. Die flexible Trennwand hat somit die zusätzliche Funktion der Abdichtung des Innenraums des Motorgehäuses

Wenn sich der Motor im Betrieb erwärmt, dehnt sich die Luft im innenraum des Motorgehäuses aus und erzeugt in dem Raum zur Aufnahme des Elektromotors einen Überdruck. Dieser Überdruck kann dadurch kompensiert werden, daß die flexible Trennwand in Richtung des Ausgleichraumes ausgelenkt wird, so daß sich das Volumen des Ausgleichsraums verkleinert und das Volumen des Raums zur Aufnahme des Elektromotors ausdehnt. Wenn der Ausgleichsraum mit der Umgebung verbunden ist, kann das im Ausgleichsraum enthaltene Medium entweichen. Dadurch wird der Druck im Raum zur Aufnahme des Elektromotors augeglichen.

Wie erwähnt, ist das erfindungsgemäße Motorgehäuse für Elektromotoren im Automobilbereich und insbesondere in Geländefahrzeugen insbesondere in Geländefahrzeugen mit Vierradantrieb, wie sogenannte Pickup-Trucks, bestimmt. Die Erfindung eignet sich auch besonders für Fahrzeuge mit Bootsanhänger, welche geeignet sind, rückwärts ins Wasser zu fahren, sowie andere Sports Utility-Fahrzeuge. Wenn beispielsweise ein solches Fahrzeug ein Gewässer durchquert und dadurch der Elektromotor in das Wasser gelangt, wird er schlagartig von einer sehr hohen Betriebstemperatur auf die Wassertemperatur abgekühlt, wodurch ein Unterdruck im Motor entsteht. Um zu vermeiden, daß dieser Unterdruck dazu führt, daß das Wasser durch die Lager oder andere undichte Stellen des Motors in den Motorraum angesaugt wird, sieht die Erfindung vor, den Unterdruck durch das Ausgleichsvolumen auszugleichen.

Insbesondere kann die flexible Trennwand in Richtung des Raums zur Aufnahme des Elektromotors ausgelenkt werden, um das Volumen dieses Raums zu verringern und dadurch einen Druckausgleich zu schaffen. In gleichem Maße, wie sich das Volumen des Raums zur Aufnahme des Elektromotors verringert, vergrößert sich das Ausgleichsvolumen. Da der Ausgleichsraum mit der Umgebung verbunden ist, kann bei diesem Vorgang Luft und Flüssigkeit in den Ausgleichsraum eindringen, nicht jedoch in den Raum zur Aufnahme des Elektromotors, welcher durch die flexible Trennwand abgetrennt ist.

Wenn der Motor sich während des laufenden Betriebs wieder erwärmt, steigt allmählich wieder der Druck in dem Raum zur Aufnahme des Elektromotors und drückt gegen die flexible Trennwand, so daß das Ausgleichsvolumen wieder abnimmt. Bei diesem Vorgang werden Luft und Wasser, die möglicherweise im Ausgleichsraum vorhanden sind, aus diesem herausgedrückt. Wasser in dem Ausgleichsraum kann auch durch Schwerkraft abfließen. Durch geeignete Anordnung der Verbindungskanäle und Verbindungsbohrungen zwischen dem Ausgleichsraum und der Umgebung auf unterschiedlich hohem Niveau, kann das Abfließen durch Schwerkraft unterstützt werden.

Die flexible Trennwand ist vorzugsweise nach Art einer Membran ausgebildet. Sie kann aus einem Elastomer bestehen. Geeignete Werkstoffe zur Herstellung der Membran sind z.B. Acrylnitril-Butadien-Kautschuk (NBR); Ethylen-Propylen-DienKautschuk (EPDM); Fluor-Kautschuk (FKM). Als Werkstoff für die Membran können auch semipermeablen Materialien verwendet werden, sofern sie eine ausreichende Widerstandsfähigkeit haben und die hohen Temperaturen aushalten können. Unter Umständen sind Materialien aus der Textilindustrie, beispielsweise Gore-Tex™ geeignet.

Die flexible Trennwand oder Membran hat mehrere Funktionen. Einerseits ermöglicht sie, das Volumen des Raums zur Aufnahme des Elektromotors und das Volumen des Ausgleichraums in dem Motorgehäuse abhängig von den Druckverhältnissen im Motor zu variieren, um einen Druckausgleich im Motor zu schaffen. Andererseits gewährleistet die flexible Trennwand eine hermetische Abdichtung des Motorraumes gegen den Ausgleichsraum, der zur Umgebung offen ist. Dadurch kann sichergestellt werden, daß in den Ausgleichsraum eindringende Flüssigkeit und andere Verschmutzungen nicht in den Motorraum gelangen. Bei Verwendung eines semipermeablen Werkstoffs kann die flexible Trennwand so gestaltet werden, daß Flüssigkeit zwar von dem Raum zur Aufnahme des Elektromotors in den Ausgleichsraum gelangen kann, nicht jedoch in entgegengesetzte Richtung strömt.

Der Ausgleichsraum ist zwischen dem Gehäusedeckel und der flexiblen Trennwand gebildet. Um eine Verbindung zur Umgebung zu schaffen, ist in dem Gehäusedeckel wenigstens ein Durchgang, vorzugsweise sind zwei Durchgänge ausgebildet. Die Durchgänge können als Nuten, Bohrungen oder in anderer Form gebildet sein. Vorzugsweise sind die Durchgänge so geformt, daß keine Feststoffe in den Ausgleichsraum dringen können. Hierzu können labyrinthartige Gänge oder eine verdeckte Bohrung oder Nut vorgesehen sein.

Bei einer bevorzugten Ausführungsform der Erfindung weist der Gehäusedeckel Mittel zur Lagerfixierung der flexiblen Trennwand bei Verformung der Trennwand auf. Diese Mittel können beispielsweise Stege, Rippen oder Pfosten umfassen.

Bei einer weiteren bevorzugten Ausführungsform der Erfindung ist zwischen dem Gehäusekörper und dem Gehäusedeckel eine Kabelführung vorgesehen, die Leitungen zur Verbindung mit dem Elektromotor aufweist. Dabei kann die flexible Trennwand einteilig mit einer Dichtung zwischen der Kabelführung und dem Gehäusekörper und/oder zwischen der Kabelführung und dem Gehäusedeckel ausgebildet sein.

Die Erfindung sieht auch einen Elektromotor mit einem Stator und einem Rotor vor, welche in einem Motorgehäuse der oben beschriebenen Art eingeschlossen sind.

Die Erfindung ist im folgenden anhand bevorzugter Ausführungsformen mit Bezug auf die Zeichnungen näher erläutert. In den Figuren zeigen:

Fig. 1    eine Schnittdarstellung durch einen Elektromotor mit einem Motorgehäuse gemäß der Erfindung;

Fig. 2    eine perspektivische geschnittene Darstellung durch ein Motorgehäuse gemäß der Erfindung; und

Fig. 3    eine perspektivische Explosionsdarstellung eines Motorgehäuses gemäß der Erfindung.

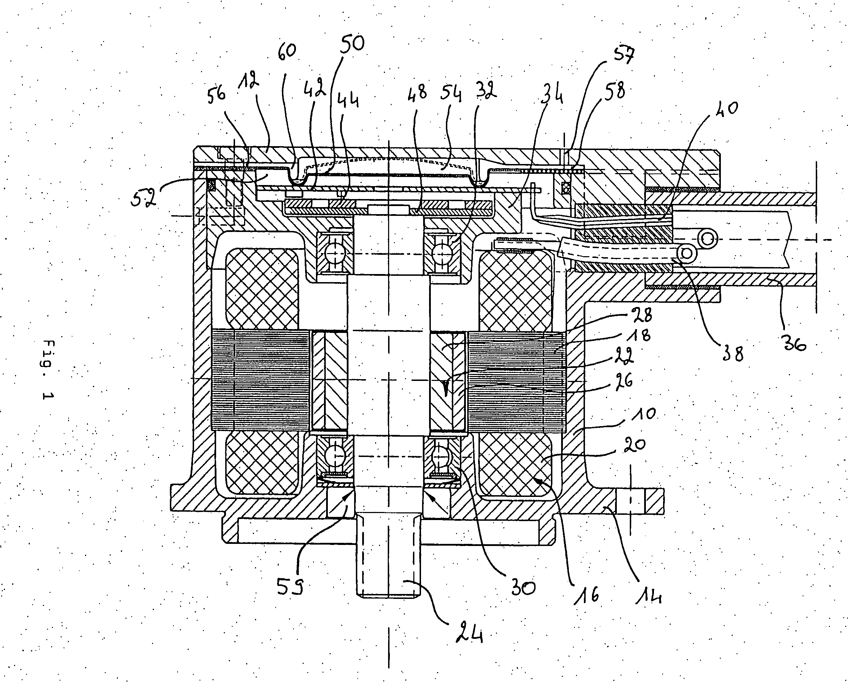

Fig. 1 zeigt eine Schnittdarstellung durch einen Elektromotor mit einem Motorgehäuse gemäß der Erfindung. Der Elektromotor ist vorzugsweise ein bürstenloser Gleichstrommotor oder ein anderer Permanentmagnet-Motor.

Der in Fig. 1 gezeigte Elektromotor weist einen Gehäusekörper 10 und einen Gehäusedeckel 12 auf. An den Gehäusekörper 10 ist ein Flansch 14 zur Befestigung des Motors beispielsweise in einem Kraftfahrzeug angeformt. Dieser Flansch 14 wird auch als A-Flansch bezeichnet. Der Gehäusekörper 10 hat eine grundsätzlich zylindrische Form und ist drehfest mit einem Stator 16 verbunden, der einen z.B. aus Blechen aufgebauten Statorkörper 18 und Phasenwicklungen 20 umfaßt. Ein Rotor 22 ist drehfest mit einer Welle 24 verbunden und dreht relativ zu dem Gehäusekörper 10 und dem Stator 16. Der Rotor 22 umfaßt einen Rotormagneten 26 und einen Eisenrückschluß 28. Der Rotor 22 und die Welle 24 sind über zwei Wälzlager 30, 32 in dem Gehäusekörper 10 gelagert. Bei der gezeigten Ausführungsform sind die Wälzlager 30, 32 Kugellager, wobei ein erstes Kugellager 30 in den Flansch 14 des Gehäusekörper 10 integriert ist und ein zweites Kugellager 32 über einen weiteren Flansch 34, der auch als B-Flansch bezeichnet wird, an dem Gehäusekörper 10 abgestützt ist. Der im wesentlichen zylindrische Gehäusekörper 10 des Motorgehäuses erstreckt sich von dem A-Flansch 14 zu dem B-Flansch 34 und wird durch den Gehäusedeckel 12 abgeschlossen.

Zwischen dem Gehäusekörper 10 und dem Gehäusedeckel 12 ist eine Kabelführung 36 vorgesehen, die Leitungen 38, 40 zur Verbindung mit dem Elektromotor aufnimmt. An dem B-Flansch 34 ist ferner eine Sensorplatine 42 angebracht, die einer Signalgebereinrichtung 44 zugeordnet ist, welche über ein Trägerbauteil 48 an der Welle 24 befestigt ist. Bei der gezeigten Ausführungsform kann die Signalgebereinrichtung 44 beispielsweise Magnetspuren aufweisen, denen ein Positionssensor auf der Sensorplatine 42 gegenüberliegt. Anschlußleitungen 40 für die Sensorik sind über die Kabelführung 36 ebenso nach außen geführt wie Anschlußleitungen 38 für die Phasenwicklungen 20.

Zwischen den Gehäusedeckel 12 und den Gehäusekörper 10 ist eine Membran 50 eingefügt, die einen Raum 52 zur Aufnahme des Elektromotors.von einem Ausgleichsraum 54 im Inneren des Motorgehäuses trennt. Während der Raum 52 zur Aufnahme des Elektromotors durch den Gehäusekörper 10, die Lager 30, 32, den B-Flansch 34 und die Membran 50 gegenüber der Umgebung weitgehend abgedichtet ist, ist der Ausgleichsraum 54 zur Umgebung hin fen. Hierzu sind in dem Gehäusedeckel 12 mehrere (vorzugsweise mindestens zwei) Nuten 56, 58 oder Bohrungen ausgebildet, die eine Verbindung des Ausgleichsraums 54 zur Umgebung schaffen. Die Membran 50 trennt nicht nur den Raum 52 zur Aufnahme des Elektromotors von dem Ausgleichsraum 54, sondern bildet auch an den Verbindungsflächen von Gehäusekörper 10, B-Flansch 34 und Gehäusedeckel 12 eine Dichtung zwischen diesen, die verhindert, daß Flüssigkeit oder andere Fremdstoffe in den Raum 52 zur Aufnahme des Elektromotors eindringen. Die Membran kann aus einem Elastomer oder einem anderen undurchlässigen oder semipermeablen Werkstoff gebildet sein, wobei dieser Werkstoff so beschaffen sein muß, daß keine Flüssigkeit, Luft oder andere Medien von dem Ausgleichsraum 54 in den Raum 52 zur Aufnahme des Elektromotors gelangen. An dem Gehäusedeckel 12 können, wie in Fig. 1 gezeigt, Vorsprünge, Stege, Rippen 60 oder andere Mittel zur Lagefixierung und Führung der Membran 50 bei Auslenkung der Membran vorgesehen sein.

Die Kabelführung 36 kann als ein Wellrohr oder durch eine andere, an sich bekannte Kabelanbildung gebildet sein. Vorzugsweise ist die Kabelführung 36 gegen den Gehäusedeckel 12 und den Gehäusekörper 10 über eine Dichtung abgedichtet, die mit der Membran 50 einteilig, als seitliche Verlängerung dieser Membran ausgebildet ist. Alternativ ist die Dichtung der Kabelführung 36 aus demselben Material wie die Membran 50 jedoch als getrenntes Bauteil ausgebildet. Auch andere, im Stand der Technik an sich bekannte Dichtungen können vorgesehen werden.

Die Membran 50 dient, wie oben erläutert, zur Abtrennung des Raums 52 zur Aufnahme des Elektromotors von dem Ausgleichsraum 54 innerhalb des Motorgehäuses. Während der Raum 52 zur Aufnahme des Elektromotors auf der Abtriebsseite zum Motorgetriebe hin mittels einer Radialwellendichtung 59 gegen das Eindringen von Getriebeöl abgedichtet ist, ist der Ausgleichsraum 54 zur Umgebung über die Nuten 56, 58 sowie eine Bohrung 57 offen. Da der Raum 52 zur Aufnahme des Elektromotors nicht vollständig gegenüber der Umgebung abgedichtet werden kann, besteht bei plötzlichen Druckänderungen innerhalb des Motors aufgrund von schockartigen Temperaturänderungen, insbesondere in dem Fall, daß der Motor in Wasser eintaucht, die Gefahr, daß Wasser in den Motorinnenraum 52 angesaugt wird. Um dies zu verhindern, schafft die Erfindung durch Einfügen der Membran 50 den Druckausgleichsraum 54, der einen übermäßigen Unterdruck oder auch Überdruck im Motorraum 52 ausgleicht.

In der Praxis kann bei Elektromotoren, die als Getriebeschaltmotoren, Lenkkraftmotoren, Pumpenmotoren oder dergleichen in Geländefahrzeugen eingesetzt werden, eine plötzliche Temperaturänderung von 30% bis 40% auftreten. Wenn beispielsweise die Motorbetriebstemperatur 398 Kelvin beträgt und der Elektromotor in Eiswasser mit einer Temperatur von 278 Kelvin eintaucht, ergibt sich eine Druckänderung gemäß der folgenden Formel:

$$P1/P2 = T1/T2 \approx 0{,}70$$

was bei konstantem Volumen einem Druckabfall von etwa 30% entspräche. Um diesen Druckabfall im Motorinnenraum 52 bei schlagartiger Abkühlung des Elektromotors auszugleichen, muß das Volumen des Motorinnenraums 52 entsprechend verkleinert und somit das Ausgleichsvolumen 54 entsprechend vergrößert werden. Da das Ausgleichsvolumen 54 mit der Umgebung in Verbindung ist, kann ohne weiteres ein Druckausgleich zur Umgebung erfolgen, indem über die Nuten 56, 58 Luft und/oder Wasser in den Ausgleichsraum 54 gesaugt werden und dieser sich ausdehnt. Bei geeigneter Anordnung der Nuten 56, 58 am Motorgehäuse kann sichergestellt werden, daß eventuell angesaugtes Wasser wieder abfließt, wenn der Druckausgleich hergestellt ist und das Fahrzeug das Wasser verlassen hat.

Je nach Anwendungsfall und Dimensionierung des Elektromotors kann die Membran 50 an anderer Stelle angeordnet sein, um ein relativ größeres Ausgleichsvolumen 54 vorzusehen. Sie kann auch anders geformt sein als in der gezeigten Ausführungsform.

Ein besonderer Vorteil der Erfindung besteht darin, daß die Membran 50 sowohl die Trennung von Motorraum 52 und Ausgleichsraum 54 realisiert als auch eine Dichtfunktion zur Abdichtung des Gehäusedeckels 12 auf dem Gehäusekörper 10 und dem B-Flansch 34 realisiert. Zusätzlich kann die Membran 50 auch die Kabelführung 36 abdichten und eine Zugentlastung der Kabelführung bilden.

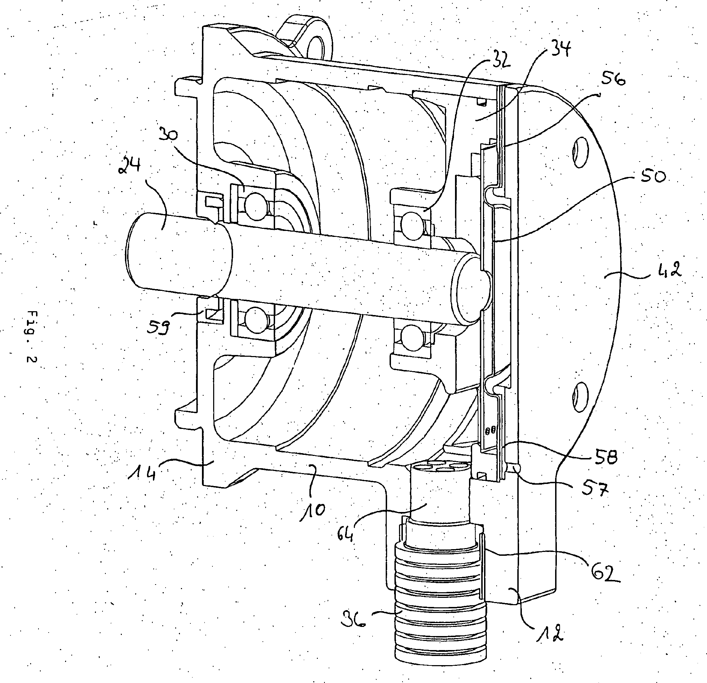

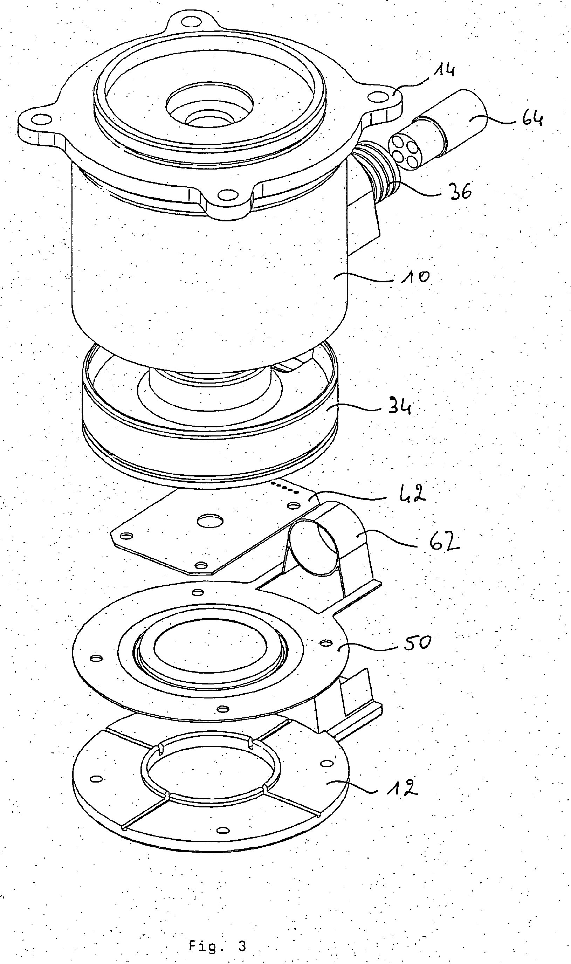

Fig. 2 und 3 zeigen eine geschnittene perspektivische Darstellung sowie eine perspektivisch Explosionsdarstellung des Motorgehäuses gemäß der Erfindung zur weiteren Veränschaulichung derselben. Wie in diesen Figuren gezeigt, umfaßt das Motorgehäuse einen Gehäusekörper 10, an den der A-Flansch 14 angeformt ist. Der B-Flansch 34 ist an dem gegenüberliegenden Stirnende des Gehäusekörpers 10 in diesen eingesetzt. Er trägt eine Sensorplatine 42. Das Gehäuse wird durch den Gehäusedeckel 12 abgeschlossen, wobei die Membran 50 den Ausgleichsraum zwischen Membran 50 und Gehäusedeckel 12 von dem Motorraum zwischen Membran 50 und Gehäusekörper 10 trennt.

An der Membran 50 ist ferner ein Dichtring 62 angeformt, der die Kabelführung 36 gegen den Gehäusekörper 10 und den Gehäusedeckel 12 abdichtet. Bei der gezeigten Ausführungsform ist die Kabelführung 36 durch ein Wellrohr gebildet, in das eine elastische Stopfbuchse 64 eingesetzt ist, die der Fixierung und Abdichtung von Kabeln und Leitungen zur Verbindung mit dem Elektromotor dient. Die Membran 50 und der Dichtungsring 62 bilden eine dichte Verbindung zwischen Gehäusedeckel 12 und Gehäusekörper 10 und schaffen gleichzeitig eine Zugentlastung der Kabelführung 36. Dadurch wird eine schalenförmige, formflüssige Zugentlastung der Kabelführung sowie eine einfache und sichere Montage derselben ermöglicht. Insbesondere ist dadurch eine Vormontage der für den Elektromotor notwendigen Kabel und Leitungen mit Steckerleisten, Kabelschuhen und dergleichen möglich, ohne daß diese einzeln durch ein Loch im Motorgehäuse oder eine Kabelverschraubung geführt werden müssen.

Die weiteren Merkmale und Funktionen des erfindungsgemäßen Motorgehäuses sind wie mit Bezug auf Fig. 1 beschrieben.

Der erfindungsgemäße Elektromotor wird vorzugsweise als Hilfsmotor für die Lenkkraftunterstützung, eine Kühlpumpe, eine Getriebeschaltung oder dergleichen in Kraftfahrzeugen und insbesondere in Geländefahrzeugen eingesetzt, in denen solche Motoren besonders großen Temperaturschwankungen und widrigen Umwelteinflüssen ausgesetzt sind.

Die erfindungsgemäße Membran 50, welche den Motorraum 52 von dem Ausgleichsraum 54 trennt besteht aus einem elastischen Material, wie einem Elastomer, z.B. NBR, EPDM, FKM, oder einem semipermeablen Material, das jedoch eine ausreichende Widerstandsfähigkeit bei hohen Drücken und Temperaturen haben muß. Auch die Verwendung einer PTFE-Membran oder einer Membran aus einem ähnlichen Material ist denkbar. Die Membran stellt sicher, daß der Motorraum abgedichtet ist und keine Fremdkörper und insbesondere Flüssigkeiten in den Motor eindringen können. Bei Verwendung eines semipermeablen Materials kann jedoch Flüssigkeit vom Motorraum 52 in den Ausgleichsraum 54 gelangen.

Bezugszeichenliste

| | |
|---|---|
| 10 | Gehäusekörper |
| 12 | Gehäusedeckel |
| 14 | Flansch |
| 16 | Stator |
| 18 | Statorkörper |
| 20 | Phasenwicklungen |
| 22 | Rotor |
| 24 | Welle |
| 26 | Rotormagnet |
| 28 | Eisenrückschluß |
| 30, 32 | Wälzlager |
| 34 | Flansch |
| 36 | Kabelführung |
| 38,40 | Leitungen |
| 42 | Sensorplatine |
| 44 | Signalgebereinrichtung |
| 48 | Trägerbauteil |
| 50 | Membran |
| 52 | Motorraum |
| 54 | Ausgleichsraum |
| 56,58 | Nuten |
| 57 | Bohrung |
| 59 | Radialwellendichtung |
| 60 | Rippen |
| 62 | Dichtungsring |
| 64 | Stopfbuchse |

**Patentansprüche**

1. Motorgehäuse für einen Elektromotor mit einem Gehäusekörper (10), der einen Motorraum (52) zur Aufnahme des Elektromotors eingrenzt, und einem Gehäusedeckel (12) zum Verschließen des Gehäusekörpers (10), sowie mit einer flexiblen Trennwand (50), die zwischen dem Gehäusekörper (10) und dem Gehäusedeckel (12) eingefügt ist, an den Motorraum angrenzt und einen Ausgleichsraum (54) zwischen dem Gehäusedeckel und der Trennwand abgrenzt, wobei der Ausgleichsraum (54) über den Gehäusedeckel (12) mit der Umgebung verbunden ist und einen Druckausgleich in dem Motorraum gewährleistet, **dadurch gekennzeichnet, daß** die flexible Trennwand (50) eine Dichtung zwischen dem Gehäusekörper (10) und dem Gehäusedeckel (12) bildet.

2. Motorgehäuse nach Anspruch 1, **dadurch gekennzeichnet, daß** die flexible Trennwand (50) durch eine Membran gebildet ist.

3. Motorgehäuse nach Anspruch 1 oder 2, **dadurch gekennzeichnet, daß** in dem Gehäusedeckel (12) wenigstens zwei Durchgänge (56, 58) zur Verbindung des Ausgleichsraumes (54) mit der Umgebung ausgebildet sind.

4. Motorgehäuse nach Anspruch 3, **dadurch gekennzeichnet, daß** die Durchgänge (56, 58) durch Nuten oder Bohrungen in dem Gehäusedeckel gebildet sind.

5. Motorgehäuse nach einem der vorangehenden Ansprüche, **dadurch gekennzeichnet, daß** der Gehäusedeckel (12) Mittel (60) zur Lagefixierung und Führung der flexiblen Trennwand (50) bei Verformung der Trennwand (50) aufweist.

6. Motorgehäuse nach einem der vorangehenden Ansprüche, **dadurch gekennzeichnet, daß** zwischen dem Gehäusekörper (10) und dem Gehäusedeckel (12) eine Kabelführung (36) vorgesehen ist, die Leitungen (38, 40) zur Verbindung mit dem Elektromotor aufnimmt, und daß die flexible Trennwand (50) eine Dichtung zwischen der Kabelführung (36) und dem Gehäusekörper (10) und/oder dem Gehäusedeckel (12) bildet.

7. Motorgehäuse nach einem der vorangehenden Ansprüche, **dadurch gekennzeichnet, daß** die flexible Trennwand durch eine semipermeable Membran gebildet ist.

8. Elektromotor mit einem Stator (16) und einem Rotor (22), die in einem Motorgehäuse nach einem der vorangehenden Ansprüche eingeschlossen sind.

**Claims**

1. A motor housing for an electric motor having a housing shell (10) which encloses a space (52) to accommodate the electric motor, a housing cover (12) for closing the housing shell (10), and a flexible partition (50) in the housing shell (10) which is inserted between the housing shell (10) and the housing cover (12), is adjacent to the motor space, and defines a pressure equalizing cavity (54) between the housing cover (12) and the flexible partition (50), whereby the pressure equalizing cavity (54) is connected to the outside environment via the housing cover (12) and provides pressure equalization in the motor space, **characterized in that** the flexible partition (50) forms a seal between the housing shell (10) and the housing cover (12).

2. A motor housing according to claim 1, **characterized in that** the flexible partition (50) is formed by means of a membrane.

3. A motor housing according to claim 1, **characterized in that** at least two openings (56, 58) are formed in the housing cover (12) to connect the pressure equalizing cavity (54) to the outside environment.

4. A motor housing according to claim 3, **characterized in that** the openings (56, 58) are formed by means of grooves or holes in the housing cover.

5. A motor housing according to one of the preceding claims, **characterized in that** the housing cover (12) comprises means (60) for fixing and guiding the flexible partition (50) upon deformation of the partition (50).

6. A motor housing according to claim 1, **characterized in that** a cable duct (36) is provided between the housing shell (10) and the housing cover (12) which holds leads (38, 40) for the purpose of connecting the electric motor and that the flexible partition (50) forms a seal between the cable duct (36) and the housing shell (10) and/or the housing cover (12).

7. A motor housing according to claim 1, **characterized in that** the flexible partition comprises a semi-permeable membrane.

8. An electric motor having a stator (16) and a rotor (22) which is enclosed in a motor housing according to one of the preceding claims.

**Revendications**

1. Carter moteur pour un moteur électrique, avec un corps de carter (10), délimitant un compartiment moteur (52) destiné à loger le moteur électrique, et avec un couvercle de carter (12) pour fermer le corps de carter (10), ainsi qu'avec une paroi de séparation flexible (50), qui est insérée entre le corps de carter (10) et le couvercle de carter (12), qui est adjacente au compartiment moteur et qui délimite un espace de compensation (54) entre le couvercle de carter et la paroi de séparation, l'espace de compensation (54) étant relié à l'environnement par l'intermédiaire du couvercle de carter (12) et assurant une compensation de pression dans le compartiment moteur, **caractérisé en ce que** la paroi de séparation flexible (50) forme un joint entre le corps du carter (10) et le couvercle de carter (12).

2. Carter moteur selon la revendication 1, **caractérisé en ce que** la paroi de séparation flexible (50) est formée par une membrane.

3. Carter moteur selon la revendication 1 ou 2, **caractérisé en ce que** au moins deux passages (56, 58), destinés à relier l'espace de compensation (54) avec l'environnement sont conçus dans le couvercle de carter (12).

4. Carter moteur selon la revendication 3, **caractérisé en ce que** les passages (56, 58) sont formés par des rainures ou des alésages.

5. Carter moteur selon l'une quelconque des revendications précédentes, **caractérisé en ce que** le couvercle de carter (12) comporte des moyens (60) pour fixer la position et pour guider la paroi de séparation flexible (50), lors de la déformation de la paroi de séparation (50).

6. Carter moteur selon l'une quelconque des revendications précédentes, **caractérisé en ce que**, entre le corps de carter (10) et le couvercle de carter (12) est prévue une gaine de câbles (36) réceptionnant des conduits (38,40) destinés à être reliés au moteur électrique, et **en ce que** la paroi de séparation flexible (50) forme un joint entre la gaine de câbles (36) et le corps de carter (10) et/ou le couvercle de carter (12).

7. Carter moteur selon l'une quelconque des revendications précédentes, **caractérisé en ce que** la paroi de séparation flexible (50) est formée par une membrane semi-perméable.

8. Moteur électrique comportant un stator (16) et un rotor (22) qui sont logés à l'intérieur d'un carter moteur selon l'une quelconque des revendications précédentes.

Fig. 1

EP 1 441 431 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3777194 A
- DE 3635297
- DE 4444643
- US 5796197 A
- US 5218312 A